# EUROPÄISCHE PATENTANMELDUNG

(11) **EP 0 736 715 A1**
(43) Veröffentlichungstag der Anmeldung: **09.10.1996**
(21) Anmeldenummer: 96104942.6
(22) Anmeldetag: 28.03.1996
(51) Int. Cl.: F16L 37/088, F16L 59/18, F16L 53/00

(54) **Steckkupplung, insbesondere für eine beheizte Schlauchleitung**

(30) Priorität: 05.04.1995 DE 19512721
(71) Anmelder: CGS Analysen-, Mess- und Regeltechnik GmbH, 85095 Denkendorf (DE)
(72) Erfinder: Geyer, Alfons, 85095 Denkendorf (DE); André, Helmut, 85101 Lenting (DE); Mehringer, Michael, 85125 Kinding (DE)
(74) Vertreter: Neubauer, Hans-Jürgen, Dipl.-Phys.

(57) **Zusammenfassung**

Die Erfindung betrifft eine Steckkupplung, insbesondere für eine beheizte Schlauchleitung mit einem Muffenteil (2), einem Steckteil (3), einem in einer Muffenöffnung (20) gehaltenen Dichtring (30, 31) und einer Halteeinrichtung. Diese besteht erfindungsgemäß aus einem Federring (11), der beim Zusammenstecken des Muffenteils (2) und Steckteils (3) in eine Federringnut (10) gedrängt und nach dem vollständigen Einstecken in eine Rastnut (27) auffedert, wodurch eine Rastverbindung hergestellt ist. Da hier im Gegensatz zum Stand der Technik keine Schiebehülse verwendet ist, kann der gesamte Bereich der Steckkupplung bei beheizten Leitungen mit Dämmaterial (9, 25) abgedeckt sein, so daß einerseits für eine Bedienperson die Handhabung vereinfacht und die Verbrennungsgefahr reduziert sind und andererseits keine Dämmschwachstellen auftreten.

## Beschreibung

Die Erfindung betrifft eine Steckkupplung, insbesondere für eine beheizte Schlauchleitung nach dem Oberbegriff des Anspruchs 1.

Allgemein bekannte Steckkupplungen bestehen aus einem Muffenteil, das eine in ihrer Grundform zylindrische Muffenöffnung enthält und aus einem Steckteil, das mit einem entsprechenden zylindrischen Spitzende in die Muffenöffnung des Muffenteils einsteckbar ist.

In einer umlaufenden Dichtringnut in der Muffenöffnung ist wenigstens ein Dichtring gehalten, der teilweise in die Muffenöffnung mit seiner Innenfläche hineinragt und dem eine Anlagefläche als Dichtfläche am Spitzende des Steckteils dergestalt zugeordnet ist, daß bei eingestecktem Spitzende der Dichtring durch eine Aufweitung und elastische Anlage abdichtet.

Zudem ist zwischen dem Muffenteil und dem Steckteil eine Halteeinrichtung zu deren fester und lösbarer Verbindung vorgesehen.

Solche Steckkupplungen werden einerseits dazu verwendet, Leitungen, insbesondere Schlauchleitungen, dicht zusammenzukoppeln. Dabei ist sowohl an einem Nippel des Muffenteils als auch an einem Nippel des Steckteils ein Leitungsende angeschlossen.

In einer anderen Verwendungsart ist das Steckteil oder bevorzugt das Muffenteil, fest an einem Gerät, z. B. an einem Verteilerblock einer Gasanalysenanlage, montiert. Das andere Kupplungsteil ist mit dem Ende einer Leitung verbunden, so daß diese Leitung bei einer Verbindung des Muffenteils mit dem Steckteil an das Gerät dicht anschließbar ist.

Bekannte Halteeinrichtungen, die das Muffenteil und das Steckteil fest und lösbar zusammenhalten, haben prinzipiell denselben Aufbau: in den Bereich der Muffenöffnung ragen Verriegelungselemente als Teilbereiche von Kugeln oder Walzen, die in eine umlaufende zugeordnete Haltenut am eingesteckten Spitzende eingreifen. Diese Verriegelungselemente können radial nach außen aus dem Bereich der Muffenöffnung bzw. der Haltenut verschoben werden, wodurch die Muffenöffnung sowohl zum Einstecken des Spitzendes als auch zum Lösen des Spitzendes freigegeben wird. Die Bewegung der Verriegelungselemente wird durch eine Schiebehülse bewirkt, die den Außenumfang des Muffenteils bildet und dort in Muffenlängsrichtung verschiebbar gehalten ist. Zudem ist diese Schiebehülse in Richtung der Verriegelungsstellung der Verriegelungselemente federbelastet.

Der Kupplungsvorgang kann somit nur durch Betätigung der Schiebehülse am Muffenteil ausgeführt werden, so daß diese Schiebehülse für eine Handbetätigung zugänglich sein muß.

Bei der Kupplung beheizter Leitungen entstehen dadurch nachfolgende Probleme: Solche beheizten Leitungen werden beispielsweise für die Zuführung von heißen Abgasen aus Verbrennungsmotoren zu Abgasanalysenanlagen verwendet. Mit diesen Abgasanalysenanlagen werden chemische Analysen der Motorabgase durchgeführt. Diese Abgase müssen in der Regel den Analysenanlagen mit Temparaturen von ca. 200°C über Schlauchleitungen zugeführt werden, damit nicht durch Abkühlung bereits vor der Analyse chemische Veränderungen der Abgase erfolgen. Um diese hohen Temperaturen über den gesamten Gasleitungsweg von der gerade getesteten Brennkraftmaschine bis zur Gasanalysenanlage einhalten zu können, sind die Schlauchleitungen mit Heizdrähten für eine elektrische Beheizung umwickelt und zusätzlich mit einem Mantel aus Wärmedämmaterial umgeben. Während des Testbetriebs, insbesondere für mehrere Brennkraftmaschinen, ist es regelmäßig erforderlich, die Verbindungen dieser Schlauchleitungen zu verändern und umzustecken.

Die verwendeten metallischen Steckkupplungen nehmen im Betrieb durch Wärmeübertragung eine so hohe Temperatur an, daß deren Berührung mit der bloßen Hand zu Verbrennungen führen kann. Für einen Kupplungsvorgang ist jedoch die Betätigung der Schiebehülse erforderlich, so daß diese eine ständige Gefahrenquelle für eine Bedienperson darstellt und die Handhabung durch das Erfordernis von Handschuhen, Zangen, etc. erschwert und verlangsamt ist. Zudem kann die Steckkupplung zumindest im Bereich der Schiebehülse nicht durch Wärmedämmaterial abgedeckt werden und stellt somit eine Dämmschwachstelle im Gasleitungsweg dar, an der sich das heiße Motorabgas in unzulässiger Weise bereits vor dessen Analyse abkühlen kann.

Aufgabe der Erfindung ist es demgegenüber, eine gattungsgemäße Steckkupplung so weiterzubilden, daß sie bei einfachem und preiswerten Aufbau einfach und schnell zu handhaben ist. Zudem soll bei der Verwendung der Steckkupplung mit beheizten Leitungen die Unfallgefahr bei der Betätigung reduziert und die Möglichkeit einer über die Steckkupplung durchgehenden Wärmedämmung geschaffen werden.

Diese Aufgabe wird mit den kennzeichnenden Merkmalen des Anspruchs 1 gelöst.

Gemäß Anspruch 1 besteht die Halteeinrichtung aus einem radial federbaren Federring, der in einer umlaufenden Federringnut am einsteckbaren Spitzende gehalten ist. Der Federring weist im nicht eingesteckten und nicht federbelasteten Zustand einen Innendurchmesser größer als der Durchmesser des Spitzendes am Federringnutboden auf. Zudem ist sein Außendurchmesser größer als der Durchmesser des Spitzendes im Federringnutbereich, so daß der Federring lose mit Spiel in der Federringnut liegt und dort gehalten ist. Jedoch steht er über diese in den Umfangsbereich des Spitzendes mit einem radialen Überstand vor. Beim radialen Zusammenpressen des Federrings kann dieser zumindest weitgehend im Innenbereich der Federringnut aufgenommen werden.

Dem Federring ist eine umlaufende Rastnut in der Muffenöffnung zugeordnet, die bei in die Muffenöffnung eingestecktem Spitzende der Federringnut unmittelbar gegenüberliegt. In diese Rastnut greift der Federring mit seinem radialen überstand nach dem Einschieben in die Muffenöffnung ein. Beim Einschiebevorgang wird der Federring durch die umgebende, anliegende Muffenöffnung radial in die Federringnut gepreßt, bei Deckungsgleichheit mit der Rastnut federt der Federring zur Herstellung einer Rastverbindung wieder radial auf.

Da die feste Verbindung zwischen Muffenteil und Steckteil hier über den Federring als Rastverbindung hergestellt ist, wird keine Schiebehülse zur Betätigung erforderlich. Die Verbindung wird somit nur durch einen gegenseitigen, aufeinander gerichteten Druck der beiden Muffenteile bis zum Einrasten des Federrings hergestellt. Die Kupplungsverbindung wird andererseits wiederum nur durch einen gegeneinander gerichteten Zug auf die beiden Muffenteile gelöst, wobei der Federring aus der Rastnut ausrastet. Dadurch kann eine Schiebemuffe, wie sie im Stand der Technik enthalten ist, völlig entfallen. Der Aufbau der Kupplungsteile wird dadurch einfacher und preisgünstiger. Bei beheizten Leitungen können die Heizung und/oder das Dämmaterial die Kupplungsteile umfassen. Es muß lediglich am Steckteil das Spitzende vorstehen, dieses wird jedoch in der Muffenöffnung aufgenommen. Dadurch ist eine praktisch durchgehende Wärmedämmung ohne Dämmschwachstellen auch über den Bereich der Steckkupplung hinweg geschaffen. Eine Gefahr bei der Bedienung durch heiße Kupplungsteile, insbesondere durch eine heiße Schiebehülse, liegt praktisch nicht mehr vor, da für einen Kupplungsvorgang beheizte Schlauchleitungen außen am wärmegedämmten Mantel ergriffen werden.

Die Kupplungsteile und insbesondere die Ausreißkraft der Rastverbindung über den Federring können für übliche Anwendungsfälle, insbesondere in der Abgasanalysentechnik, so dimensioniert werden, daß bei den in den Leitungen auftretenden Drucken keine selbsttätige Lösung der Verbindung erfolgt.

Vorteilhaft wird nach Anspruch 2 der Federring als Stahldrahtfederring mit einem Schlitz ausgeführt, wobei auch das Muffenteil und Steckteil aus Metall hergestellt sind.

Die Federringnut und/oder die Rastnut können im Querschnitt quadratisch oder rechteckig sein, ggf. mit einem mehr oder weniger gerundeten Nutboden, wobei nach Anspruch 4 die Federringnut, in die der Federring beim Einsteckvorgang eintauchen muß, zweckmäßig tiefer als die Rastnut ausgebildet ist.

Nach Anspruch 5 ist es vorteilhaft, den Dichtring in Einsteckrichtung vor dem Federring anzuordnen, damit der Dichtring beim Einsteckvorgang durch den Federring nicht beschädigt oder dessen Verschleiß erhöht wird. Bei beheizten Leitungen ist es ersichtlich erforderlich, Dichtringe zu wählen, die bei einer erforderlichen Elastizität für die vorkommenden Temperaturen geeignet sind.

Nach Anspruch 6 und bei Verwendung weiterer Dichtringe gemäß Anspruch 7 und Anspruch 8 sind die Durchmesser an den Dichtflächen des Spitzendes zu dessen Ende abgestuft verringert und über Einführschrägen miteinander verbunden. Dies erleichtert einerseits den Einsteckvorgang und reduziert andererseits den Verschleiß der Dichtringe.

Mit Anspruch 9 wird die Stabilität der Kupplungsverbindung durch einen formschlüssigen Eingriff verbessert.

Mit den Merkmalen des Anspruch 10 werden konkrete Ausführungen bei der Verwendung in Verbindung mit einer beheizten Schlauchleitung angegeben.

Anhand einer Zeichnung wird ein Ausführungsbeispiel der Erfindung mit weiteren Einzelheiten, Merkmalen und Vorteilen näher erläutert.

Es zeigen:
- Fig. 1: einen Schnitt durch eine Steckkupplung im nicht zusammengesteckten Zustand,
- Fig. 2: einen Schnitt durch die Steckkupplung nach Fig. 1 im zusammengesteckten Zustand, und
- Fig. 3: einen vergrößerten Schnitt des Bereichs A aus Fig. 2.

Eine Steckkupplung 1 besteht aus einem Muffenteil 2 und einem Steckteil 3.

Das Steckteil 3 ist zylindrisch ausgeführt mit einem Mittelteil 4, einem nach vorne weisenden Spitzende 5 und einem gegenüberliegenden Anschlußnippel 6 mit Außengewinde. Durch das gesamte Steckteil 3 ist eine Bohrung 7 als Gasleitung geführt.

Das Steckteil 3 ist mit der Endseite einer flexiblen Schlauchleitung 8 verbunden, die mit einem Wärmedämmantel 9 umgeben ist, der auch den Mittelteil 4 des Steckteils 3 übergreift.

Das Spitzende 5 weist in seinem hinteren zum Mittelteil 4 hin liegenden Bereich eine umlaufende Federringnut 10 auf, in der ein radial federbarer Federring 11 als Stahldrahtfederring mit Schlitz gehalten ist. Der Federring 11 weist einen Innendurchmesser auf, der größer ist als der Durchmesser am Federringnutboden, so daß dort ein Spiel 12 vorliegt. Der Außendurchmesser des Federrings 11 ist dagegen (im radial unbelasteten Zustand) größer als der Spitzenddurchmesser im Nutbereich, so daß der Federring mit seinem Umfang mit einem radialen Überstand 13 über den Bereich der Federringnut 9 hinaus radial vorsteht.

Von der Federringnut 10 nach vorne hin ist das Spitzende 5 zu kleineren Durchmessern hin mit einer ersten zylindrischen Dichtfläche 14, einer entsprechenden zweiten Dichtfläche 15 und einem vorderen Zylinderbereich 16 abgestuft, wobei diese Bereiche über Einführschrägen 17, 18, 19 ineinander übergehen.

Das Muffenteil 2 weist eine Muffenöffnung 20 als Einstecköffnung in einem Rohrteil 21 auf, an dem gegenüberliegend ein Anschlußnippel 22 angebracht ist. Durch das Muffenteil 2 ist eine Bohrung 23 als Gasweg geführt. Der Anschlußnippel 22 ist dicht in einen Anschluß- und Verteilerblock 24 einer (nicht dargestellten) Gasanalysenanlage eingeschraubt.

Der Verteilerblock 24 ist mit einer Wärmedämmatte 25 abgedeckt, die in ihrer Dicke bis zur Endseite des Rohrteils 21 reicht und dort nochmals mit einer Außenabdeckung 26 versehen ist.

Vom Eingang der Muffenöffnung 20 her gesehen weist diese der Reihe nach eine umlaufende Rastnut 27 sowie zwei weitere Dichtringnuten 28 und 29 auf, in die Dichtringe 30 und 31 eingesetzt sind.

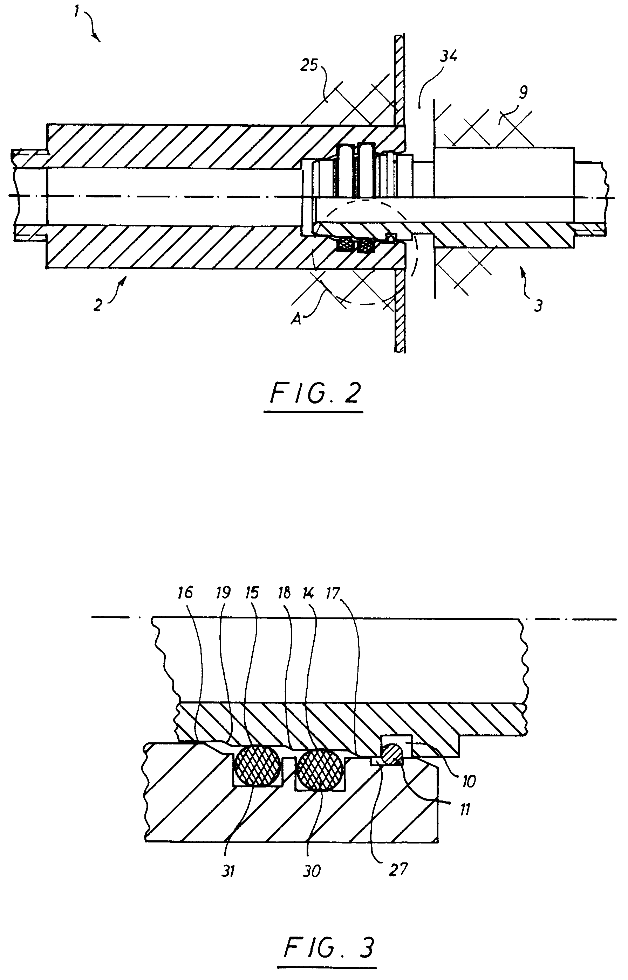

Wie aus Fig. 2 ersichtlich, sind die Abmessungen so zugeordnet, daß bei in die Muffenöffnung 20 eingestecktem Spitzende 5 der vordere Zylinderbereich 16 in einen zugeordneten Hohlzylinderbereich 32 formschlüssig eingreift, die Dichtringe 30 und 31 an den zugeordneten Dichtflächen 14 und 15 anliegen und die Federringnut 10 der Rastnut 27 gegenüberliegt.

Beim Einstecken des Spitzendes in die Muffenöffnung 20 wird über eine äußere Einführschräge 33 der Federring 11 radial zusammengedrückt in den Innenbereich der Federringnut 10, wodurch das Spiel 12 verringert wird. In dieser Stellung des Federrings 11 kann dieser in den Bereich der Rastnut 27 geschoben werden, wo er wieder radial auffedert und in die Rastnut 27 eingreift, wie dies deutlich aus der vergrößerten Darstellung nach Fig. 3 hervorgeht. Im Querschnitt sind sowohl die Federringnut 10 als auch die Rastnut 27 rechteckig ausgeführt. Da in die Federringnut 10 beim Einschiebevorgang der Federring 11 insgesamt hineingedrängt werden muß, ist diese tiefer als die Rastnut 27.

Die dargestellte Steckkupplung hat folgende Funktion:

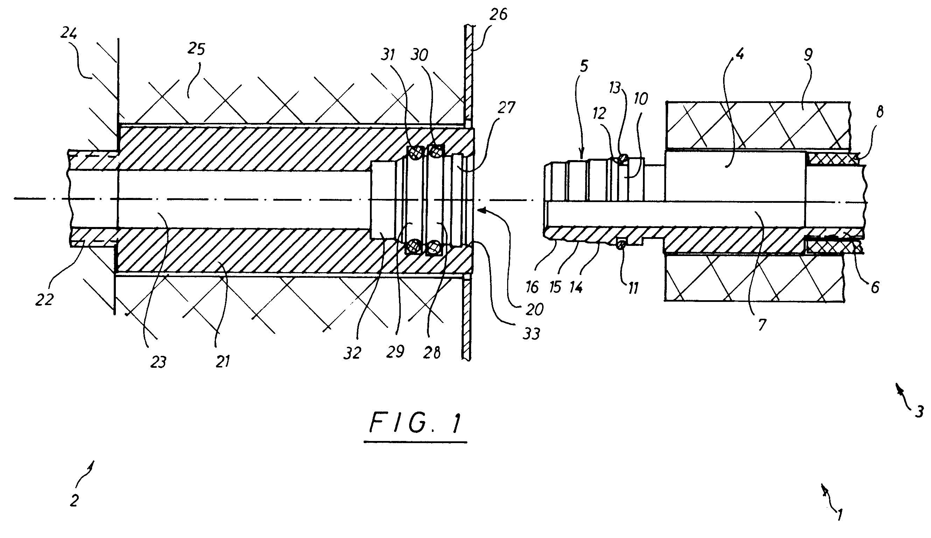

Zum Zusammenstecken der Steckkupplung 1 bzw. zum Anschluß der Schlauchleitung 8 an den Anschluß- und Verteilerblock 24 wird ausgehend von der Situation in Fig. 1 die Schlauchleitung 8 im Bereich des Steckteils 3 am Wärmedämmantel 9 ergriffen, wodurch auch bei hohen Heiz- und Mediumtemperaturen keine Verbrennungsgefahr für die Bedienperson besteht. Dann wird lediglich das Spitzende in die Muffenöffnung 20 so lange eingeschoben, bis der Federring 11 in die Rastnut 27 einrastet.

Aus Fig. 2 ist ersichtlich, daß im eingerasteten Zustand der Wärmedämmantel 9 nur mit einem geringen Schlitz 34 bis an die Wärmedämmatte 25 heranreicht, wobei auch eine unmittelbare Anlage möglich ist. Dadurch sind Wärmedämmschwachstellen entlang des Gaswegs an der Steckkupplung praktisch ausgeschlossen.

Zum Öffnen der Steckkupplung 1 wird lediglich die Schlauchleitung 8 im Bereich des Steckteils 3 am Wärmedämmantel 9 wieder ergriffen und durch Zug aus dem Muffenteil 2 entfernt, wobei der Federring 11 wieder aus der Rastnut 27 ausrastet.

## Patentansprüche

1. Steckkupplung, insbesondere für eine beheizte Schlauchleitung,
mit einem Muffenteil (2), das eine Muffenöffnung (20) enthält,
mit einem Steckteil (3), das mit einem Spitzende (5) in die Muffenöffnung (20) des Muffenteils (2) einsteckbar ist,
mit wenigstens einem in einer umlaufenden Dichtringnut (28, 29) in der Muffenöffnung (20) gehaltenen Dichtring, (30, 31) der teilweise in die Muffenöffnung (20) ragt und dem eine Anlagefläche (14, 15) als Dichtfläche am Spitzende (5) zugeordnet ist, und
mit einer Halteeinrichtung zwischen Muffenteil (2) und Steckteil (3) zu deren fester und lösbarer Verbindung,
dadurch gekennzeichnet,
daß die Halteeinrichtung aus einem radial federbaren Federring (11) besteht, der in einer umlaufenden Federringnut (10) am einsteckbaren Spitzende (5) gehalten ist, dergestalt, daß der Federring (11) im nicht eingesteckten und nicht federbelasteten Zustand einen Innendurchmesser größer als der Durchmesser des Spitzendes (5) am Federringnutboden und einen Außendurchmesser größer als der Durchmesser des Spitzendes (5) im Federringnutbereich aufweist, so daß der Federring (11) lose mit Spiel in der Federringnut (10) liegt und dort gehalten ist, jedoch über diese mit seinem Umfang mit einem radialen Überstand (13) vorsteht, und beim radialen Zusammenpressen zumindest weitgehend im Innenbereich der Federringnut (10) aufnehmbar ist,
daß dem Federring (11) eine umlaufende Rastnut (27) in der Muffenöffnung (20) zugeordnet ist, die bei in die Muffenöffnung (20) eingestecktem Spitzende (5) der Federringnut (10) unmittelbar gegenüberliegt, und in die der Federring (11) mit seinem radialen Überstand (13) nach dem Einschieben in die Muffenöffnung (20), bei der er radial zusammengepreßt wird, durch radiales Auffedern in einer Rastverbindung eingreift.

2. Steckkupplung nach Anspruch 1, dadurch gekennzeichnet, daß der Federring (11) ein Stahldrahtfederring mit Schlitz ist.

3. Steckkupplung nach Anspruch 1 oder Anspruch 2, dadurch gekennzeichnet, daß die Federringnut (10) und/oder die Rastnut (27) im Querschnitt quadratisch oder rechteckig sind, ggf. mit einem gerundeten Nutboden.

4. Steckkupplung nach einem der Ansprüche 1 bis 3, dadurch gekennzeichnet, daß die Federringnut (10) tiefer als die Rastnut (27) ausgebildet ist.

5. Steckkupplung nach einem der Ansprüche 1 bis 4, dadurch gekennzeichnet, daß die Dichtfläche (14) am Spitzende (5) in Einsteckrichtung vor der Federringnut (10) liegt und entsprechend in der gleichen Richtung gesehen die Dichtringnut (28) vor der Rastnut (27) liegt.

6. Steckkupplung nach Anspruch 5, dadurch gekennzeichnet, daß der Durchmesser des Spitzendes (5) im Bereich der Dichtfläche (14) kleiner ist als im Bereich der Federringnut (10) und beide Bereiche mit einer Einführschräge (17) verbunden sind.

7. Steckkupplung nach Anspruch 6, dadurch gekennzeichnet, daß jeweils eine zweite Dichtfläche (15) vor der ersten Dichtfläche (14) am Spitzende (5) und eine zweite Dichtringnut (29) mit einem zweiten Dichtring (31) vor der ersten Dichtringnut (28) angeordnet ist.

8. Steckkupplung nach Anspruch 7, dadurch gekennzeichnet, daß der Durchmesser des Spitzendes (5) im Bereich der zweiten Dichtfläche (15) kleiner ist als im Bereich der ersten Dichtfläche (14) und beide Bereiche mit einer Einführschräge (18) verbunden sind.

9. Steckkupplung nach einem der Ansprüche 1 bis 8, dadurch gekennzeichnet, daß das Spitzende (5) jeweils mit einem vorderen Zylinderbereich (16) und einem hinteren Endbereich um die Federringnut (10) formschlüssig in einen jeweils zugeordneten Öffnungsbereich der Muffenöffnung (20) eingreift.

10. Steckkupplung nach einem der Ansprüche 1 bis 9, dadurch gekennzeichnet, daß das Muffenteil (2) und das Steckteil (3) aus Metall hergestellt sind und wenigstens an einem Muffenteil eine flexible, elektrisch beheizte Schlauchleitung (8) angeschlossen ist und ein Mantel (9, 25) aus Wärmedämmaterial sowohl das Muffenteil (2) als auch das Steckteil (3) umgibt, bevorzugt das Muffenteil (2) oder das Steckteil (3) fest im Bereich einer Wärmedämmatte (25) mit einem Gerät (24) verbunden sind und entsprechend das Steckteil (3) oder Muffenteil (2) an einer beheizten Schlauchleitung (8) angeschlossen und von einem Wärmedämmmantel (9) umgeben sind.
